# EUROPEAN PATENT APPLICATION

(11) **EP 4 530 572 A1**
(43) Date of publication of application: **02.04.2025**
(21) Application number: 24200839.9
(22) Date of filing: 17.09.2024
(51) Int. Cl.: G01B 11/06, G01B 5/00, G01B 3/08

(54) **LASER BEAM TELESCOPIC MEASURING GAUGE**

(30) Priority: 28.09.2023 IT 202300020001
(71) Applicant: Metrica S.p.A., 36071 Arzignano (Vicenza) (IT)
(72) Inventor: DORIGUZZI BOZZO, Margherita, 20121 Milano (IT)
(74) Representative: Ripamonti, Enrico

(57) **Abstract**

A telescopic measuring gauge (1) comprises a plurality of tubular elements (5,6,7,8) telescopically coupled to each other, a first outermost telescopic element (5) being adapted to at least partially contain all the other telescopic elements (6,7,8) which are slidably coupled when the telescopic measuring gauge (1) takes a closed position, a last innermost telescopic element (8) carrying a plate (3) at a free end thereof. The plate protrudes from at least one first side (5A) of such telescopic element (5) with a first part (14) thereof, said first telescopic element (5) carrying a laser distance meter (2) on such side (5A) adapted to measure the distance of the first part (14) of said plate (3) with the emitted laser beam R and therefore calculate the length of the telescopic measuring gauge (1) when used to measure the length of a body (K) adjacent to which there is arranged the telescopic element (1) or for measuring a distance between two bodies in the space.

## Description

The present invention relates to a telescopic measuring gauge according to the preamble of the main claim.

Telescopic measuring gauges, also known as telescopic measuring tapes, have long been known. They comprise a body defined by a plurality of telescopically coupled tubular elements and comprising a first hollow telescopic element, with larger cross-section, adapted to contain all the other telescopic elements when the telescopic measuring gauge is closed. Such body comprises a last innermost telescopic element which carries at a free end thereof a plate adapted to be positioned at an end area of an extended object regarding which one intends to know the length or height, an object which can be a window, a wall, a post, a piece of furniture or the like.

The prior art telescopic measuring gauges are of the analogue reading type that is they comprise a graduated tape or flexometer associated with the first telescopic element; such tape has an end integrally joined with the free end of the last telescopic element and it is therefore unwound driven by the movement of such last telescopic element. Such measuring gauges are known to be used in vertical measurements, even up to 10 metres, a height that would not be reachable with measuring sticks or with manual flexometers despite having tapes that are highly resistant to bending and with pronounced concavity.

In most cases, the measurements carried out with the analogue telescopic measuring gauges are internal measurements (for example between the floor and the ceiling) where the required measurement starts from the outer surface of the base of the outermost tubular element and terminates on the outer surface of the free end of the last telescopic element (which may be flat, cusp-shaped with triangular or cylindrical cross-section with semi-spherical head) which comes into contact with the point to be measured.

By laterally approaching the outer surface of the free end of the last telescopic element to the point to be measured, the analogue telescopic measuring gauges also allow to carry out the so-called measurements in the space, that is a point of the extended object that does not protrude from the latter for example an end point thereof; therefore, such prior art telescopic measuring gauges allow to measure the height or the distance between the base and a point of an extended object even with perfectly smooth surface, without lateral projections.

Such measurements cannot be carried out with the normal laser distance meters specifically due to the fact that the laser beam does not find, at the free end of the extended object or along its smooth lateral surface, any protruding element on which the emitted laser beam can be reflected. This hinders carrying out the measurement with a normal laser distance meter.

In addition, an analogue telescopic measuring gauge provided with a graduated tape, usually made of steel, driven by the telescopic rods requires many mechanical details: for example, it provides for a spiral spring for the return of the graduated tape, a U-inversion of the graduated tape around a reel arranged at the end of the hollow telescopic elements, a cumbersome casing which encloses the roller which carries the spiral spring, the graduated tape and the transparent measuring window. Such casing protrudes significantly from the surface of the first telescopic element.

Furthermore, such analogue telescopic measuring gauge requires long construction, assembly and calibration times, therefore being quite expensive.

Another drawback of such analogue telescopic measuring gauges lies in their compatibility with potential penetration of water (for example rainwater) thereinto, which could result in the rusting of the internal metal parts (typically the return spring of the tape) with resulting disuse of the device.

Lastly, an excessively-quick return of the telescopic rods may not be supported by the sufficient strength of the return spring of the tape, with resulting permanent deformation thereof and blocking of the operation.

CN106643531 describes a device for measuring the height of plants or crops using a laser distance meter. Such device comprises a first base telescopic element integrally joined with a first deflector at a first end and with a first electric motor at a second end. On this motor there is arranged a support pipe above which there is arranged a second telescopic element. The entirety is said to define an apparently telescopic structure, but the first basic telescopic element and the second telescopic element, although coaxial, do not slide into each other like in a common telescopic structure even due to the fact that the support pipe and the first electric motor are arranged between them.

Such first and second telescopic elements are connected in a separable manner. The second telescopic element is used for measuring the height of a plant when such height exceeds a given value corresponding to that of the height, from the deflector, of a first telescopic lever protruding from the support pipe arranged above the motor and positioned on the second end of the first telescopic element. When the measurement height does not exceed the height of the deflector of the first protruding lever, the second telescopic element is removed.

This is the normal design according to which said prior art device is used. In this case, the laser distance meter measures the height of the plant given that such distance meter is arranged on the same plane as the protruding lever which is positioned at the top part of the plant. This using the laser distance meter so that it sends its beam towards the deflector arranged at the first end of the first (base) tubular element and measures the distance thereof.

In order to have an accurate measurement of the height of the plant, the first motor rotates the protruding lever of the support pipe so as to move it to another position where a second measurement is carried out using the laser distance meter; therefore, the height of the plant is defined by the mean of the measurements carried out.

When the height of the plant exceeds that of the protruding lever, the second telescopic element is associated with the support pipe and the height of the plant is measured using a second protruding telescopic lever and as the sum of the distance measured by the laser distance meter from both deflectors associated with the two telescopic elements. The second protruding lever is coplanar with the deflector associated with the second telescopic element.

In order to carry out the measurements of the distance of the distance meter from both deflectors, a second motor is associated with the laser distance meter so as to able to rotate it by 180° on a plane containing the first protruding lever.

Therefore, the Chinese document does not disclose a unitary telescopic structure where a first telescopic element is adapted to contain even the second telescopic element in a movable fashion. Furthermore, the prior art document in question discloses the use of a motor for rotating the laser distance meter by 180° so as to measure the distance from a base of the structure where a (lower) deflector is arranged and from an upper deflector associated with the second telescopic element.

When the latter is not used, the laser distance meter is at the end of the first telescopic element and it sends the laser beam downwards, only toward the deflector arranged at the base.

When the height of the plant exceeds that of the first protruding lever, the second motor rotates the direction of the laser beam, which is directed upwards, toward the second deflector by 180°. The height is given by the sum of the two measurements carried out. The second telescopic element may be used only by an operator facing it and who can read the outcome of the measurement on a screen associated with the first telescopic element.

In other words, the prior art device can only be used if placed on the ground, so as to allow to use the distance meter and read the datum. Should the prior art device be used projecting in the space from a structure which rises from a plane and where the user is positioned (for example, a trestle of a power line), at least the weight of the motors and of the distance meter associated therewith would prevent such user from using the device (which could slip from the hand and fall).

In any case, when using both telescopic elements, the prior art device has to carry out two different measurements by rotating the laser distance meter by 180°. This besides requiring at least one protruding telescopic arm (the one associated with the second telescopic element).

This discloses a device that is complex to manufacture and difficult to use; in addition, the presence of the first deflector around the first telescopic element prevents from adhering the prior art device to a surface of a body to be measured, it is cumbersome and it is a hindrance when it comes to measuring in narrow spaces.

Therefore, the prior art solution has a use limited to the field of measurement of plants.

CN211263759 discloses a device for measuring also the distance of an end of a body that cannot reflect a laser beam of a laser distance meter.

Essentially, the document in question discloses a load-bearing structure of a distance meter, which consists of a hollow base at whose one end there is arranged a plurality of telescopic sections. A part which supports the distance meter is associated with the base. The prior art document does not disclose anything on the characteristics that the distance meter should have so as to obtain precise measurements. As a matter of fact, it does not disclose anything on taking into account the distance of the zero point of the distance meter from the first support base, just like it does not disclose anything on taking into account the thickness of the plate when the measurement is taken from its upper face.

More particularly, the device has a plurality of sections associated to each other through telescopic joints and where a base element supports a laser distance meter. However, in this prior art solution, the laser distance meter is not fixed directly on a surface of said base element, but it is carried by its own support base connected cantilevered to the base element of the device and having a seat or groove in which such distance meter is retained by springs and a clamping plate is arranged.

Lastly, such distance meter cooperates with an element for reflecting the emitted laser beam and carried by a support element arranged projecting at a free end of the terminal section of the device; the reflection element cooperates with the end of the body to be measured.

It should be observed that the support element is rotatable on its axis (or pivot)(coincident with the axis of the telescopic elements) and it is connected with the reflection element of the laser beam.

Both the reflection element and the support element extend only from one side of the pivot which constrains the support element to the telescopic element. In particular, the support element is not provided with a second part thereof which protrudes on the opposite side of the pivot with respect to the reflection element.

The terminal plate, perpendicular to the axis of the telescopic elements, may be placed with its lower face on the terminal surface of a body to be measured (in the so-called external measurement) or with its upper face on a downward-facing surface of a body to be measured (in the so-called internal measurement). The distance meter inserted in the groove of its support base emits a laser beam which must hit the lower face of the plate to carry out the measurement. The detected measurement is displayed on the screen of the distance meter.

The electronic measuring device, that is the distance meter, is not integrated adhering and parallel to the telescopic elements, but it is removably arranged along a groove of a cantilevered element arranged perpendicularly with respect to the telescopic elements and it is not arranged in a fixed position, along the groove.

Upon closer examination, the configuration described above reveals some drawbacks.

First and foremost, in order to carry out the measurement with the laser beam, the plate must be at the (direction) orthogonal line passing through the point where the distance meter is inserted into the groove fixed perpendicularly to the outermost element of the telescopic pipes.

The support and the plate arranged at the end of the last telescopic rod are rotatable around a pivot coincident with the axis of the telescopic elements, and the prior art document does not mention a stop or lock or friction device.

Given that said plate is at a vertical height beyond the reach of the arms of a user (operator) during use, it is not clear how the telescopic pipes can be opened upwards without unintentionally avoiding to rotate the plate, which must necessarily intercept such laser beam in order to reflect the laser beam emitted by the distance meter inserted into the groove of the protruding element fixed to the base of the first telescopic pipe.

Another drawback lies in the fact that besides the task of reflecting the laser beam, the plate, with its lower face, must also combine the function of measuring element (or measuring spout) resting on or simply arranged adjacent to the point to be measured.

Given that the distance meter is not arranged adhering to the telescopic bodies but on the contrary it is arranged along a groove of the perpendicular element, at a given distance from the outer face of the hollow base of the telescopic structure, in order to intercept and reflect the laser beam, the deflector must have a length greater than said distance, therefore being very cumbersome and above all also increasing its weight. This facilitates the possible bending with respect to the vertical axis of the telescopic elements which support it, especially when they are all extracted, unbalancing the instrument as a result when it is not kept vertical or in the event of a "sail" effect due to wind.

In addition, in order to also act as a measuring element of a measuring point, the plate must extend beyond the reflection point of the laser beam, further increasing its length.

On the other hand, even were the plate to be within the reach of the operator, even a measurement carried out at two different times would be difficult to carry out and uncertain: such measurement would firstly require to move the plate close to the measuring point and then rotate it until it intercepts the laser beam.

Another drawback of the solution according to the prior art document in question lies in the fact that it does not disclose anything on taking into account the thickness of the plate with regard to the so-called "internal" measurements, given that the laser beam allows to carry out the measurement by reflecting on the lower surface of the plate and not on the upper one used for the "internal" measurement.

In addition, CN211263759 provides a detailed description of the telescopic structure, but it does not disclose the characteristics that the distance meter should have in order to guarantee truthful and accurate measurement.

As a matter of fact, it does not disclose anything with regard to said measurement and quantification of the distance of the zero point of the distance meter from the base of the telescopic structure, that is from the end of the hollow base from which the measurement is to start.

Lastly, the lack of description of the characteristics of the distance meter implies that any distance meter can be used to complete the support telescopic structure and transform it into a measuring instrument.

This fact confirms the generic aspect and the lack of accuracy, that is the unreliability, of the prior art solution.

Other prior art documents, relating to the topic of the present invention, but which still do not anticipate it, are defined by CN207585490 and CN104330009.

An object of the present invention is to provide an improved telescopic measuring gauge with respect to prior art analogue telescopic tape measuring gauges. More particularly, an object of the present invention is to provide a novel telescopic measuring gauge provided with a measuring member defined by a laser distance meter which allows to carry out digital measurements relating to the height of a vertical body, or the length or distance between two points of the space or between two parts of the same body, reproducing in the telescopic measuring gauge a distance that is parallel and exactly identical to the one to be measured on the body, that can be measured using a laser distance meter.

Another object is to provide a telescopic measuring gauge of the type mentioned above which is, at the same time, easy to manufacture, which has a smaller number of components to be assembled, that does not need particular maintenance over time, and therefore substantially to provide a measuring instrument that is more cost-effective, while guaranteeing a degree of precision that falls within the tolerances admitted for laser distance meters.

A further object is to provide a telescopic measuring gauge of the type mentioned above which is simplified with respect to the prior art solutions given that it does not provide for motor-driven members associated with the laser distance meter.

Another object is to provide a telescopic measuring gauge which can be compacted after use, but which can still be easily and quickly returned to a use position which can also reach various metres length-wise.

A further object is to provide a telescopic measuring gauge of the type mentioned above which allows an accurate measurement of the lengths of protruding bodies resting on a ground or on a plane and which at the same time allows to carry out measurements of non-protruding parts, the so-called "internal" measurements such as for example from the floor to the ceiling of a room, and measurements of hollow parts obtained in a smooth surface without a protrusion (the so-called external measurement).

These and other objects which shall be more apparent to the person skilled in the art are attained by a telescopic measuring gauge according to the attached claims.

For a better understanding of the present invention, the following drawings are attached hereto, purely by way of non-limiting example, wherein:

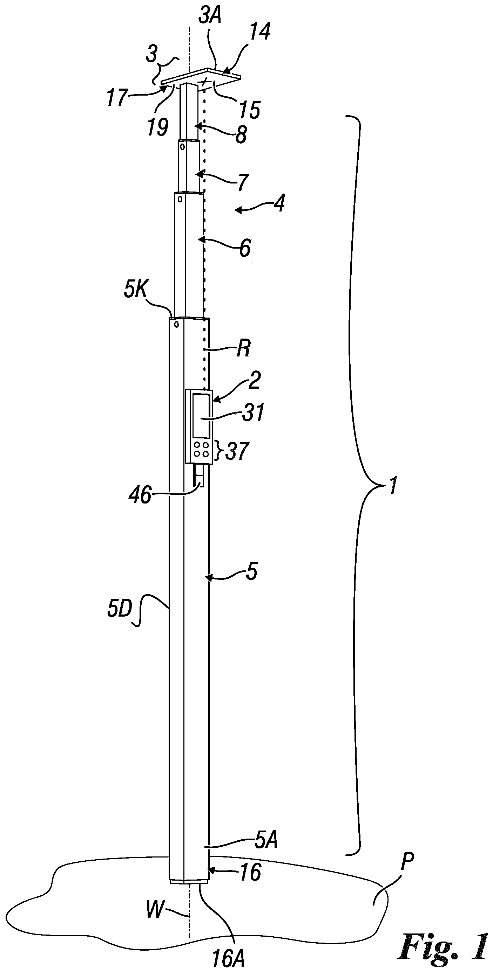

figure 1 shows a perspective view of a telescopic measuring gauge according to the invention;

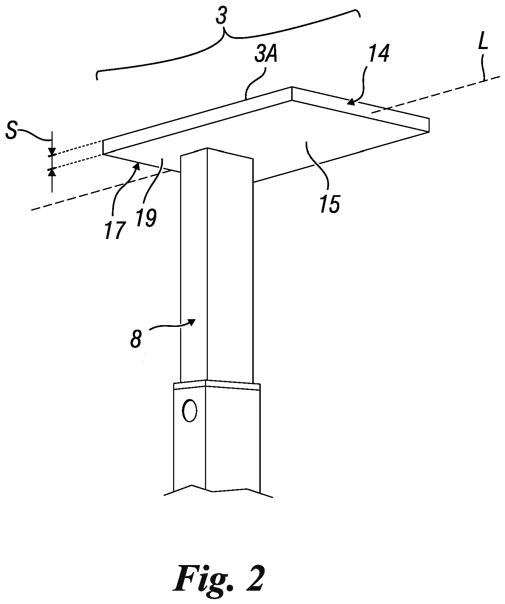

figure 2 shows a perspective view of a detail of the telescopic measuring gauge according to the invention;
figures 3-5 show various types of measurement that can be carried out with the telescopic measuring gauge according to the invention;
figure 6 shows a schematic view of a variant of the measuring gauge of figure 1;
figure 7 shows a perspective enlarged view of another variant of the invention; and
figure 8 shows a cross-sectional enlarged view of a further variant of the invention.

With reference to the aforementioned figures, a telescopic measuring gauge according to the invention is generally indicated with 1 and it comprises a laser distance meter 2 adapted to carry out height, length or distance measurements with the aid of a measuring plate 3 associated with a movable end part of the telescopic measuring gauge 1.

More particularly, the telescopic measuring gauge 1 comprises a body 4 comprising a plurality of coaxial hollow tubular telescopic elements: although in the figures such telescopic elements are four and they are indicated with 5, 6, 7 and 8, the number mentioned above may also be smaller or bigger than four. In particular, such body 4 comprises a first outermost telescopic element 5 adapted to house (at least partially) all the other telescopic elements 6, 7 and 8 when the telescopic measuring gauge 1 is closed; a last innermost telescopic element 8 carries the measuring plate 3 and it forms the end telescopic element or last telescopic element of the telescopic measuring gauge 1.

This allows to compact the body 4 when the telescopic measuring gauge 1 is not used.

At least the first telescopic element 5 and preferably all the telescopic elements 5-8 have a polygonal cross-section, advantageously decreasing rectangular and they slide on each other along a longitudinal axis W that is common and defining the longitudinal axis W of the telescopic measuring gauge 1. Such sliding (which results in the compaction of the measuring gauge in the first telescopic element 5 or at its maximum extension or at a partial extension thereof) occurs in a friction manner by means of known slides (not shown) interposed between consecutive telescopic elements and preferably made of plastic material (for example ABS); this allows the controlled sliding between said elements, but with friction sufficient to hold the telescopic elements mutually stationary irrespective of their position with respect to each other once removed from the initial closing position. Such slides also act as spacers between one telescopic element and the adjacent one. The friction between the slides and the tubular elements is determined by a pressure element (for example a leaf spring also not shown) inserted in the inner face of the slide whose outer face ensures the sliding with the tubular element with which it collaborates.

There is a stop element or an end-of-stroke (not shown) associated with each telescopic element.

Due to the presence of the slides described above, the telescopic elements do not close inside each other by gravity even when removed only partially. However, such elements and therefore the telescopic measuring gauge can only be closed by forcing the elements 5-8 to mutually slide into each other.

The dimension and the section of the single telescopic elements, that is the combination of their length, width and thickness, is suitably defined so that the flexural deflection with respect to a horizontal plane of the telescopic measuring gauge in its maximum extension measures a few millimetres for example less than 8 mm when, at the distance of 1 metre from the coupling of each single telescopic element, a weight of 1000 grams (1 kg) is applied.

In order to have an appropriate stability and rigidity of the telescopic measuring gauge, when each telescopic element 6-8 is removed from the one that contains it (5-7) the telescopic elements 6-8 remain within the adjacent one 5-7 with respect to which they slide by at least 30 cm.

As mentioned, the telescopic measuring gauge uses a laser distance meter 2 to carry out the measurements and not a graduated tape as a measuring device. Such laser distance meter 2 defines a digital measuring device which overcomes the drawbacks of the analogue measuring device of the prior art telescopic measuring gauges.

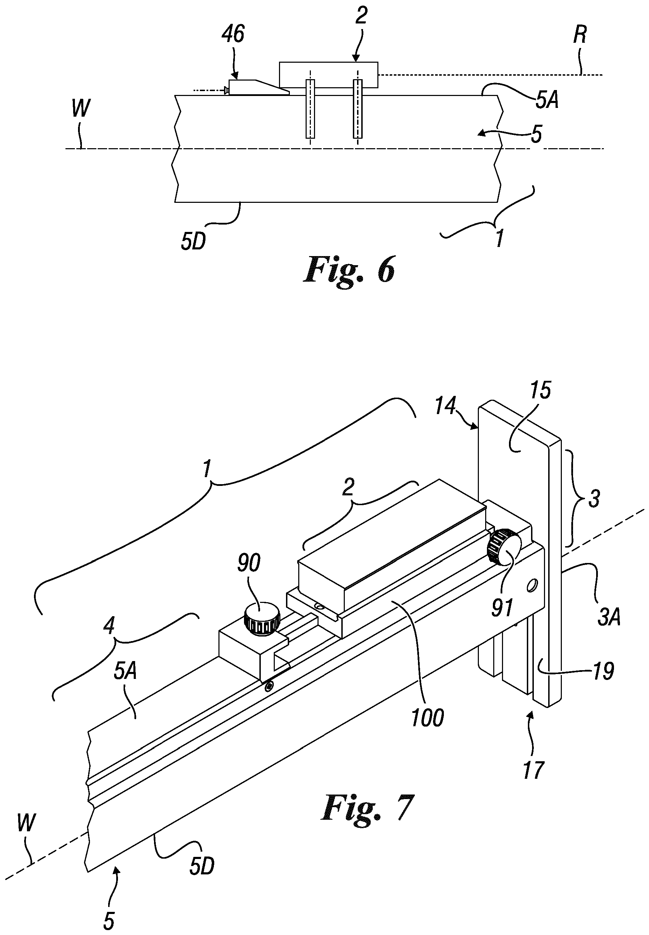

The laser distance meter 2 is fixed to the first telescopic element in any known manner: for example, the laser distance meter 2 is screwed or retained with a clamp to a support 100 (see figure 7) in turn directly fixed to a first flat side 5A of the first telescopic element 5. The laser distance meter that is stably fixed (directly or indirectly through the support 100) to said flat side 5A is adapted to emit, in a known manner, and always in the same direction towards the plate 3, a measuring laser beam R substantially parallel to the longitudinal axis W of the telescopic measuring gauge 1 and therefore of the telescopic element 5. In order to enable known distance calculation means typical of the distance meter (and adapted to measure a length of an object) to carry out a measurement, such laser beam must cooperate with the measuring plate 3 arranged at the vacant end of the last telescopic element 8. Such plate 3 has a longitudinal axis L perpendicular to such axis W.

Given that the more the telescopic elements are extracted from their initial closing position the more there may be a certain bending of such elements (due to their weight if arranged horizontally or for example due to wind if arranged in vertical direction), there is provided for the option (for example through two screws orthogonal to each other 90,91) of adjusting the support of the laser distance meter so as to be always able to intercept the plate 3 with the laser beam. This will be described hereinafter in relation to figure 6.

The plate (or reference member for the measurement) 3 has a known thickness S and dimensions such to protrude, with a part 14 thereof, from the first side to the first flat face 5A of the first telescopic element 5 on which the laser distance meter is present. In this manner, the laser beam R emitted by the laser distance meter 2 (substantially parallel to the axis W of the element 5 mentioned above) may hit a side or face 15 of the part 14 of the plate 3, perpendicular to the axis W, facing towards the distance meter and be reflected towards the latter so that the distance meter defines a distance between its zero point and such plate. As described hereinafter, through an appropriate solution in the software of the laser measuring gauge, such distance corresponds to the height of a vertical member or to the length of a generic body or the distance between two points of the space whose measurement is sought.

The plate 3 also has a side or outer face that is an upper side 3A opposite to the side or face 15.

It should be observed that the wording "substantially parallel" is used to indicate that the laser beam R may be parallel to the axis W or form an angle approximately comprised between +3° and -3° therewith.

More particularly, the laser distance meter 2 is arranged and constrained at a known distance on one side or flat closing end element 16 (or "base") of the first telescopic element 5; such element 16 has an outer face 16A adapted to rest on a plane P from which it rises a member K regarding which one intends to know the height or the length or from which plane one intends to know the distance of a point in the space (for example where a body separated from such plane is arranged or is to be arranged).

The plane from which the member K rises may also be defined by a flat part of a body oriented in any manner in the space from which the member K protrudes (which is designed in any manner) and regarding which one intends to know the length or regarding which one intends to know the distance of the end part thereof from the flat part of said body. For example, such member K may be a cantilevered arm of a support trestle of a high-voltage power line.

The laser distance meter 2 is calibrated in a per se known manner to obtain a measurement of the distance of the face 15 of the plate 3 suitably corrected with a constant value Z1 equal to the(known) distance of the outer face 16A of the base or closing element 16 from the zero point typical of the distance meter (point which is in this manner moved at such outer face 16A). In order to provide for the case where the operator, in the measurement to be carried out, intends to also take into account the thickness S of the plate (for example for the measurement from the floor to the ceiling of a room commonly referred to as "internal"), the distance meter provides for a correction of the measurement carried out through a second constant Z2 equal to the first constant Z1 increased by the thickness S. To this end, on a screen 31 of the distance meter there is shown the icon of the two measurement options and the choice is left to the operator through a special key present on an interface or keypad 37 of the laser distance meter 2 depending on the type of measurement intended to be obtained.

In other words, to carry out a measurement which terminates on the inner face 15 of the plate, the operator will enter the correction which provides for adding the constant Z1.

On the other hand, for a measurement that terminates on the outer face 3A of the plate, the operator will enter the correction which adds the constant Z2.

Advantageously, the plate 3 has another protruding part 17 ("measuring spout") opposite to the one 14, having a lower face 19 and a shape such to protrude from a second side 5D opposite to the side 5A of the telescopic element 5 with respect to which the part 14 of the plate 3 protrudes. The upper side, advantageously flat, 3A of the plate 3 is common and it overlies both such parts 14 and 17 of the plate, having identical thickness S. As mentioned, the face 15, preferably coplanar to the one 19, is adapted to cooperate with the laser beam R while the face 19 is adapted to define the "measuring point" cooperating with the body regarding which one intends to measure the length or distance.

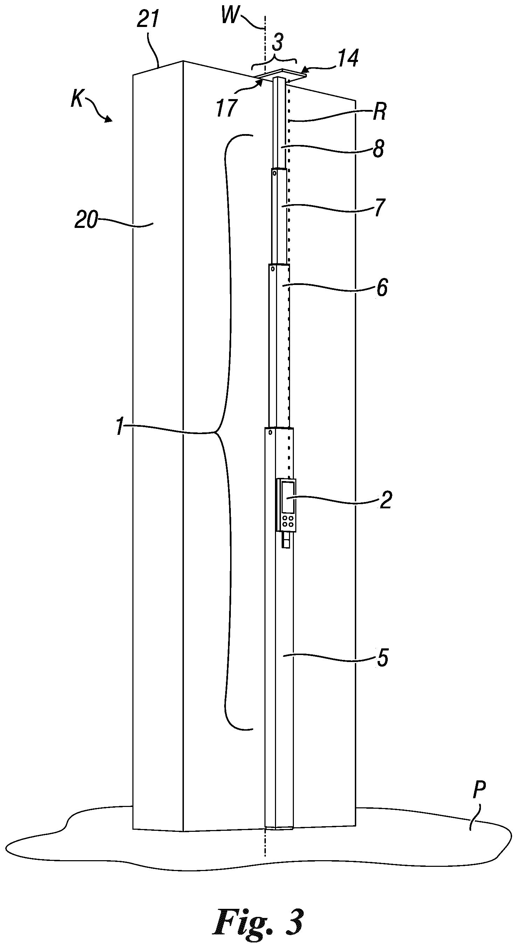

With reference to figures 3-5, for example, such body to be measured K may be a post 20 whose vacant end 21 is without with lateral protrusions. In such case, the use of a simple laser distance meter would not allow to measure the length (or height) of the body K. The telescopic measuring gauge now allows to carry out this measurement.

As a matter of fact, with reference to figure 3, in a first measuring example, the telescopic measuring gauge 1 is extended until the face 19 of the protruding part 17 of the plate 3 rests on the free end 21 of the post 20 (or, generally, of the body K). Then, the base 16 of such telescopic measuring gauge is placed on the plane P and the distance meter is activated. The laser beam R hits the face 15 and it is reflected towards the distance meter which determines the distance between it (distance meter) and the face 15 mentioned above. Given that such face is advantageously coplanar to that 19 of the plate 3, the distance between the laser distance meter and the free end 21 of the post 20 on which the face 19 of the plate rests is identified.

Such distance, suitably corrected by the constant value Z1 relating to the distance between the zero point typical of the distance meter 2 and the outer face 16A of the base 16 that is with the plane P, is highlighted on the screen or display 31 of the distance meter and it corresponds to the height of the post 20.

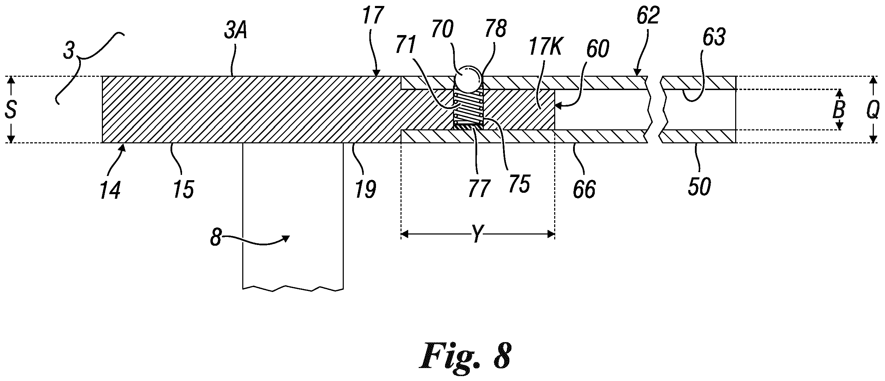

In order to facilitate the contact of the protruding part 17 of the plate with a body receding with respect to the axis of the device W when it is in vertical position (for example the vertex of a triangular-shaped section of the deck of a truck), the invention provides for an extension 50 which can be fitted on the protruding part 17 of the plate. Such extension is schematically shown in figure 8, where parts corresponding to those already described are indicated using the same reference numerals.

The plate 3 with thickness "S" at an end 60 thereof has, for a predefined length (indicated with Y in figure 8), a protuberance 17K having a thickness "B" smaller than the one S mentioned above. The protuberance 17K is adapted to cooperate with a hollow section 62 (also referred to as extension) having an outer dimension "Q" equal to the thickness S and an inner cavity 63 at least in the end part thereof whose size is substantially equal to the thickness B of the protuberance 17K mentioned above so as to be slidably coupled with it.

In this manner, a lower face 66 of the extension is coplanar with the lower face 19 of the part 17 of the plate 3 (and with the lower face 15 of the part 14 of such plate) .

In this manner, the section or extension 62 may be fitted on the protuberance 17K, and represent an extension over the length required by the operator, of the protruding part 17 (measuring spout).

The extension 62 is locked on the plate 3 in any known manner. For example, there may be provided for a known ball 70 which cooperates with a first end of a spiral compression spring 71 both inserted into a special through hole 75 obtained in the protuberance 17K. The extension 62 is locked when the ball 70, pushed by the spring 71 which rests at the other end thereof on a cap 77 of the through hole 75, penetrates into and partially protrudes from a special through hole 78 (with diameter smaller than ball 70) obtained in the thickness of the extension 62.

The extension is unlocked by pushing such ball into the through hole 75 of the protuberance 17K and removing the extension from the plate 3.

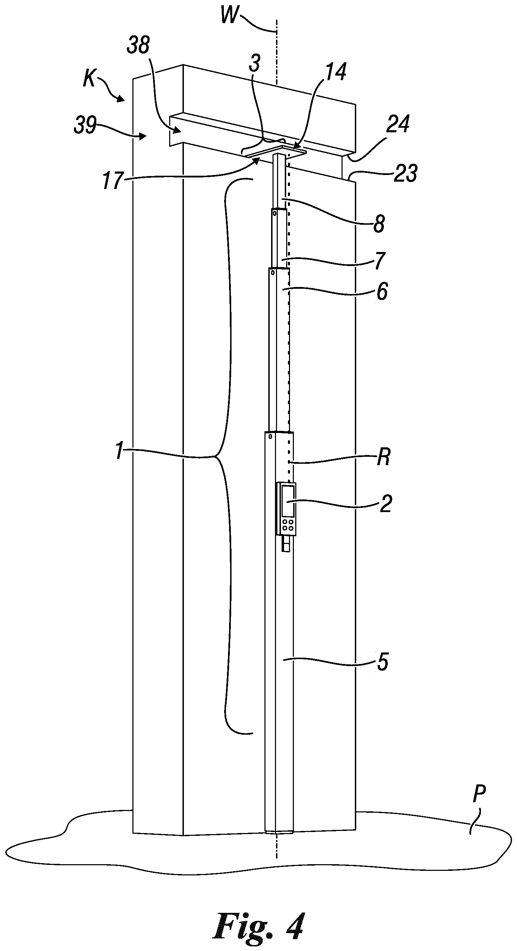

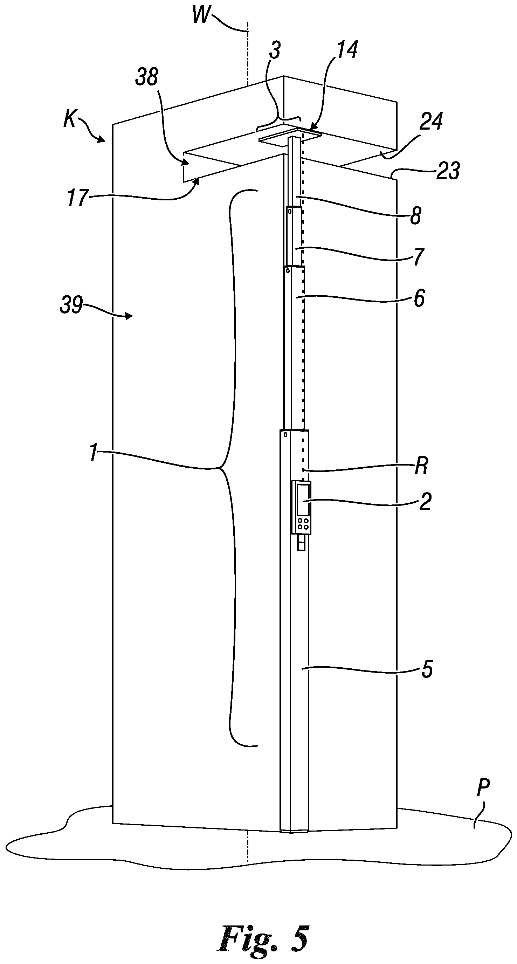

With reference to figures 4 and 5, the measurement of the distance from the plane P of a lower side 23 or of an upper one 24 of a recess 38 provided for in a body K for example defined by a wall or by a piece of furniture 39, is shown.

The measurement of the position of the lower side 23 from the plane P is obtained similarly to the description outlined above to define the height of the post 20; the measurement of the height from the plane P of the upper side 24 of the recess 38 is carried out as described above, but by placing the flat upper side 3A of the plate on such upper side 24. The measurement carried out by the laser distance meter 2 as described above must therefore be corrected by adding the constant Z2 which also comprises the value of the thickness S of the plate 3, which is automatically carried out by the distance meter, as outlined above, through an appropriate command entered by an operator on an interface 37 with display 31 of the distance meter 2, which is obviously arranged outside the body 2. The measurements of the distance meter are always "processed" by an appropriate and known control algorithm of the distance meter, previously designed to add to the measurements the constant value Z1 relating to the distance between the zero point typical of the distance meter and the face 16A of the base 16 or the constant value Z2 which also includes the constant value of the thickness S of the plate.

Lastly, as shown in figures 6 and 7, a member for adjusting the spatial position of the laser beam R emitted by the distance meter 2 may be associated to the laser distance meter 2.

In a first embodiment (figure 6), such member is a known tilting device 46 interposed between the face 5A of the first telescopic element 5 and the distance meter and possibly a second tilting element perpendicular to the first (not shown). Such tilting devices allow to adjust the inclination of the laser beam R with respect to the face 5A mentioned above in the desired direction substantially parallel to the axis W of the telescopic measuring gauge 1, allowing the beam R to intercept the plate in any case, even when the telescopic device is significantly bent when most of the elements have been removed. Alternatively (figure 7), the adjustment member may comprise assembly screws 90 and 91 having directions perpendicular to each other which fix the support 100 of the distance meter to the first telescopic element 5.

In this case, the measuring gauge is initially fitted so that the laser beam R is substantially parallel to the axis W of the telescopic device and it intercepts the inner face 15 of the part 14 of the plate. In the event of a pronounced inadvertent bending and to an extent that the beam no longer intercepts such face 15, the operator can reposition the direction of the beam R in the face 15 of the plate mentioned above by acting on the adjustment screws 90,91 in a known manner.

Furthermore, the laser distance meter may also have the option of providing an automatic rotation by 90° of the data shown on the display 31 depending on whether the telescopic measuring gauge 1 (and therefore the distance meter 2) is in vertical or horizontal position. The data are shown with large numbers or characters, preferably larger than 10 mm by height.

Therefore, the invention allows to have a precise digital measurement of the length of members or bodies that are completely straight and without protrusions or of the distance between two bodies distant from each other and, with regard to the most distant body, without protrusions.

To summarise, compared to CN106643531, the present invention has the following different characteristics:
a) there is one telescopic structure and it does not consist of two separable telescopic parts;
b) all the telescopic elements 6-8 slide in a single outermost telescopic element 5 which contains them and from which they can be removed without a predefined sequence;
c) the laser distance meter 2 is fixed to the first (outer) telescopic element 5 and there is no motor envisaged for driving or rotating the distance meter; the laser distance meter 2 of the invention is fixed on the outermost face 5A of the body 4 of the telescopic measuring gauge 1, and it is arranged with the axis thereof parallel to that of the telescopic elements 5-8 of such body 4 and at a fixed and known distance from the outer face 16A of the base 16 of the first telescopic element 5;
d) no lower deflector is provided for given that:
   d1) the direction of the laser beam of the distance meter 2 is always and only upwards, in the direction of the plate 3 arranged perpendicularly to the end of the terminal telescopic pipe 8.
   d2) The laser distance meter 2 according to the invention has entered into the memory a constant value Z1 equal to the distance between its zero point and the outer face 16A of the base 16 of the telescopic measuring gauge 1, a value which is added to the measurement detected using the laser beam pointed towards the plate 3, so as to obtain the overall measurement of the distance to be measured with only one operation;
e) the fact that the laser beam and reflection plate 3 are always perpendicular to each other, also enables to carry out the oblique measurement.

Compared to CN211263759, first and foremost the present invention is provided with the plate 3 comprising the protruding part 17, opposite to the face 15 for reflecting the laser beam R. This is a significant difference between the Chinese prior art document and the present invention: as a matter of fact, the position of a desired measurement point that does not protrude from the profile of the body to be measured can be detected using the part 17 of the plate 3. At the same time, the face 15 of the plate 3, allows the laser beam R to be reflected towards the distance meter 2 and therefore carry out the measurement. In other words the measurement detected by the protruding part 17 on the body to be measured, is exactly duplicated in a parallel fashion by the laser beam of the distance meter which is reflected on the lower face 15 of the plate, the measurement detected by the laser beam being alternatively summed to the constant values Z1 and Z2 mentioned above.

As mentioned, CN211263759 does not disclose the distance of the distance meter from a point from which to start the measurement (the base of the telescopic structure) in any manner whatsoever.

In the present invention, said distance is included in the constant value Z1 which is added to the value measured by the laser beam which provides the distance of the lower face 15 of the plate 3 from the zero point thereof.

Furthermore, CN211263759 does not disclose anything on the thickness of the laser reflector, which should be further summed to the value of the distance of the first zero point of the distance meter from the end of the first telescopic element in case of a measurement carried out by the upper face of such reflector.

The option of selectively and alternatively entering the two constants (which respectively quantify both the distance of the base of the telescopic elements from the zero point of the distance meter and such last value increased by the thickness of the plate in the event of a measurement which terminates on the upper face of the plate) are a clear drawback and error of the Chinese prior art document unlike the present invention which instead addresses and resolves the two cases mentioned above.

As a matter of fact, according to the present invention, the integrated distance meter is specific for the telescopic measuring gauge 1, incorporating the first constant Z1 to include in the measurement the fixed distance of the zero point of the distance meter 2 from the outer face 16A of the base of the telescopic measuring gauge 1 and selectively and alternatively the second constant Z2 which additionally also includes the thickness "S" of the plate 3.

For these reasons, the distance meter 2 is described and claimed with clearly specific characteristics. The telescopic measuring gauge 1 could not be used without a distance meter like the one indicated in the present document, given that it would obviously provide distorted measurements of the incorporated constants.

Therefore, to summarise, the differences between the present invention and CN211263759 are as follows.
a) In the Chinese document, a reflection element extends on only one side with respect to the axis of the telescopic elements and it is without, on its side opposite to the one cooperating with the laser beam, a protruding part which acts as a measurement spout directly associated with such reflection element.
b) In the prior art document, the terminal plate is rotatable with respect to the axis of the telescopic structure, while in the present invention it is fixed and always intercepts the measuring laser beam.
c) In the prior art document, the distance meter is removable and movable along a groove obtained in a fixed support perpendicular to the base of the telescopic elements.
d) The prior art document does not disclose anything on the characteristics of the distance meter.
e) The need to add the distance of the zero point of the distance meter of the terminal part of the hollow base on the structure, an event which affects the precision of the measurement, to the detected measurement of the laser beam is not addressed in the Chinese document.
f) Adding the thickness of the reflection element to the measurements carried out by the upper face of the plate, is not provided for in the prior art document either.
g) The distance of the distance meter from the axis of the telescopic elements entails an equivalent extension of the reflection element with an increase in the overall dimensions and the weight of the telescopic structure.

In conclusion, besides the slidable telescopic elements, the support structure described in CN211263759 does not have essential similar points compared to the instrument described in the present document.

With the characteristics outlined above, in the present invention the measuring device as designed is capable of duplicating the sought distance on the body in the opposite side with respect to the axis of the telescopic measuring gauge and exactly in a parallel fashion, enabling it to be measured with the laser beam.

The present invention is defined by the characteristics according to the claims that follow.

## Claims

1. Telescopic measuring gauge (1) comprising a body (4) having a plurality of tubular telescopic elements (5,6,7,8), a first end tubular element (5) carrying a measuring device laterally associated with a first flat side (5A) thereof, a last telescopic tubular element (8) carrying a reference member for the measurement defined by a plate (3) having a longitudinal axis (L) perpendicular to a longitudinal axis (W) of the body (4) of the telescopic measuring gauge, said plate (3) protruding from such last telescopic tubular element (8) and from the first flat side (5A) of the first tubular element (5), the plate (3) having an upper side (3A), the measuring device carried by the first end tubular element (5) being a laser distance meter (2) provided with calculation means configured to calculate a length of a an object, a first part (14) of the plate (3) protruding relatively from said first flat side (5A) of the first end tubular element (5) so as to cooperate with the laser beam (R) emitted by the laser distance meter (2), a lower face (15) of said first part (14) of the plate facing towards the first end tubular element (5) reflecting such laser beam (R) and acting as measurement reference for the laser distance meter (2) so as to allow the latter to calculate a length or height measurement or a distance of a body (K) adjacent to which there is the telescopic measuring gauge (1), **characterised in that** said tubular telescopic elements are telescopically and slidably coupled to each other, a first end tubular element(5) being adapted to movably and at least partially contain all the other telescopic elements (6,7,8) when the telescopic measuring gauge is in a closed position, the laser distance meter emitting only one laser beam (R) always directed toward said plate (3), the laser distance meter being constrained to said first side (5A) of such first end tubular element (5) and lying along such side (5A), the laser beam (R) emitted by said laser distance meter (2) being substantially parallel to the longitudinal axis (W) of the body (4), a typical zero point of said laser distance meter (2) being distant by a fixed and known distance from an outer face (16A) of a base end (16) of the first end tubular element (5), the distance between said typical zero point of the laser distance meter (2) and said outer face (16A) of said base (16) being added to the calculation of the length, height or distance measurement of the body (K) carried out by said laser distance meter (2) kept fixed on said first end tubular element (5), said measurement being shown on a display (31) of such distance meter.

2. Telescopic measuring gauge according to claim 1, **characterised in that** a second part (17) of the plate (3) protrudes from a second side (5D) of the first end tubular element (5) opposite to the first side (5A) of the latter with which the laser distance meter (2) is associated.

3. Telescopic measuring gauge according to claim 2, **characterised in that** the second part (17) of the plate (3) has a lower face (19) which is coplanar with the lower face (15) of the first part (14) of the plate, said faces (15, 19) being faced towards the first end tubular element (5).

4. Telescopic measuring gauge according to claim 2, **characterised in that** said first and second part (14, 17) of the plate (3) have a common upper surface (3A) which is flat.

5. Telescopic measuring gauge according to claim 1, **characterised in that** the zero point of the measurement carried out by the laser distance meter (2) is on an outer face (16A) of the base end (16) of the first end tubular element (5).

6. Telescopic measuring gauge according to claim 1 or 5, **characterised in that** said plate has a defined thickness (S), said thickness being added to the calculation of the length, height or distance measurement of the body (K) carried out by the laser distance meter (2) only when such measurement is carried out through the upper side (3A) of the plate resting against a part (24) of such body (K).

7. Measuring gauge according to claims 1 and 6, **characterised in that** the laser distance meter (2) selectively and alternatively shows on the display (31) thereof the measurement of the outer face (16A) of the base (16) up to the lower face (15) of the first part (14) of the plate (3) or up to the upper side (3A) of the plate (3).

8. Telescopic measuring gauge according to claim 3, **characterised in that** the lower face (19) of the second protruding part (17) of the plate (3) is adapted to rest on a part (21, 23) of the body (K) being measured to define the reference of the measurement.

9. Measuring gauge according to claim 1, **characterised in that** an adjustment device (46) adapted to allow to adjust the laser beam (R) is provided for so that it is substantially parallel to the axis (W) of the body (4) of the telescopic measuring gauge.

10. Telescopic measuring gauge 9, **characterised in that** said adjustment device comprises a tilting device (46) arranged between the first face (5A) of the first end tubular element (5) and the laser distance meter (2) or a support (100) thereof through which said distance meter is associated with the first end tubular element (5).

11. Telescopic measuring gauge according to claim 9, **characterised in that** said adjustment device comprises screw members (90, 91) cooperating with the laser distance meter (2) or with a support (100) through which the distance meter is associated with the first end tubular element (5), said screw members (90, 91) being adapted to adjust the position of the laser beam (R) on two planes perpendicular to each other, one of such planes being parallel to the first side (5A) of the first end tubular element (5).

12. Telescopic measuring gauge according to claim 1, **characterised in that** a flexural deflection of the measuring gauge body (4) with respect to a horizontal plane is smaller than 8 mm when, at the distance of 1 m from the protrusion point of one telescopic element from the adjacent one, a weight of 1 kg is arranged on such telescopic element.

13. Telescopic measuring gauge according to claim 3, **characterised in that** an extension (50) removably associated with an end (60) of the second part (17) of the plate (3) is provided for, said extension (50) having a lower face (66) coplanar with the lower face (19) of the second part (17) of the plate mentioned above.

14. Telescopic measuring gauge according to claim 13, **characterised in that** the extension (50) has an outer dimension (Q) equal to the thickness (S) of the plate (3), said extension (50) being defined by a hollow section (62) having an inner cavity (63), said inner cavity having, at least in the end part thereof, a dimension substantially equal to the thickness of a protuberance (17K) of said second part (17) of the plate so as to be slidably coupled with such end, the end (60) of the second part (17) of the plate having a predefined length.

15. Telescopic measuring gauge according to claim 13 **characterised in that** at least one of said extension (50) and said end (60) of the second part of the plate (3) has releasable constraint means (70, 71, 78) for removably fixing such extension (50) on said end.
